# EUROPEAN PATENT SPECIFICATION

(11) **EP 3 822 098 B1**
(45) Date of publication and mention of the grant of the patent: **29.04.2026**
(21) Application number: 20206347.5
(22) Date of filing: 09.11.2020
(51) Int. Cl.: B60D 1/62, B60R 9/10

(54) **METHOD FOR CONFIGURING A TRAILER DETECTION SYSTEM**
VERFAHREN ZUM KONFIGURIEREN EINES ANHÄNGERDETEKTIONSSYSTEMS
PROCÉDÉ DE CONFIGURATION D'UN SYSTÈME DE DÉTECTION DE REMORQUE

(30) Priority: 14.11.2019 DE 102019130688
(43) Date of publication of application: 19.05.2021
(73) Proprietor: Valeo Schalter und Sensoren GmbH, 74321 Bietigheim-Bissingen (DE)
(72) Inventor: GOWRIPUROHITH, Vijayakumar, Lakshminarasimha, 74321 Bietigheim-Bissingen (DE); HALLEK, Michael, 74321 Bietigheim-Bissingen (DE)
(74) Representative: Pothmann, Karsten

(56) References cited:
- EP-A1- 2 018 981
- EP-A1- 2 116 400
- EP-B1- 2 186 684
- DE-A1- 102014 206 248
- DE-A1- 102018 202 733
- ES-A1- 2 253 129
- US-A1- 2013 158 740
- US-A1- 2017 287 320
- US-A1- 2019 217 831

## Description

The present invention refers to a method for configuring a trailer detection system, wherein the trailer detection system (10) is an ultrasonic detection system, wherein a bicycle trailer (12), which is not in contact with the underground, comprising the trailer detection system, is connected to a vehicle, comprising a computing unit, via a hitch.

The present invention also refers to a trailer detection system with means for configuring the trailer detection system for executing the steps of the method. EP 2 186 684 B1 discloses a bicycle trailer, which is not in contact with the underground, comprising a trailer detection system, wherein the trailer detection system is an ultrasonic detection system, known in the prior art.

Furthermore, the present invention refers to a trailer comprising the trailer detection system.

Furthermore, the present invention refers to a vehicle with means for configuring a trailer detection system.

Furthermore, the present invention refers to a computer program comprising instructions which, when the program is executed by a computer, cause the computer to execute the steps of the method.

Furthermore, the present invention refers to a data carrier signal carrying the computer program.

Furthermore, the present invention refers to a computer-readable medium comprising instructions which, when executed by a computer, cause the computer to execute the steps of the method.

Basically known are ultrasonic sensor devices for motor vehicles. Such ultrasonic sensor devices are used, for example, in connection with parking support systems for motor vehicles. Such an ultrasonic sensor device usually comprises several ultrasonic sensors with which ultrasonic signals can be emitted. In addition, ultrasonic sensors can be used to receive ultrasonic signals reflected from objects or obstacles. In this way, the objects or obstacles in the vicinity of the vehicle can be detected. In addition, a distance between the vehicle and the object can be determined on the basis of the transit time between the emission of the ultrasonic signal and the reception of the ultrasonic signal reflected by the object.

The sensor signals are configured based on a configuration parameter. This configuration parameter can describe a threshold value or a threshold value curve with which the sensor signals are compared. Only those parts of the sensor signal which are above the threshold value or the threshold curve are considered when configuring the sensor signals. In the case of ultrasonic sensor devices which are integrated into the vehicle during production, the configuration parameters are determined precisely for each vehicle model.

In order to ensure reliable detection, sensor units, such as ultrasonic sensors, must always be configured so that they can precisely detect their distance to an underground and their angle to the horizontal axis of the underground while considering their distance to it.

A state-of-the-art document dealing with the configuration of sensor units is the German disclosure document DE 10 2016 115 391 A1. This state-of-the-art document describes a configuration of sensor units on a vehicle using a mobile device, such as a mobile phone or smartphone. The method is used to set up an ultrasonic sensor device for a vehicle. Here, a configuration parameter stored on a control unit of the ultrasonic sensor device is adapted, whereby a sensor signal of at least one ultrasonic sensor of the ultrasonic sensor device is configured as a function of the configuration parameter. To adjust the configuration parameter, an adjustment signal is received wirelessly from a mobile terminal device external to the ultrasonic sensor device. This procedure is only intended for sensor units directly on vehicles, so that it is not very flexible.

In general, there is a constant need to equip trailers with sensor units and thus extend the detection system of a vehicle. However, each time a vehicle is connected to a trailer equipped with a trailer detection system, the trailer detection system must be configured so that the detection can be precise and reliable. Otherwise there is a risk of accidents due to false detection.

US2017/0287320A1 discloses methods and systems for facilitating communications between a vehicle and a trailer.

DE 102018202733 A1 discloses a device for configuring at least one function of a vehicle depending on a trailer coupled to the vehicle.

US 2019217831 A1 discloses a system including a head vehicle and a tail vehicle that is towed by the head vehicle. Together the head vehicle and tail vehicle have a control subsystem for controlling among other things braking of the tail vehicle.

US 2013158740 A1 discloses a motor vehicle combination including a towing vehicle and a trailer. The motor vehicle combination includes a bidirectional communication unit, which is designed for exchanging data between the towing vehicle and the at least one trailer.

It is an object of the present invention to provide a method for configuring a trailer detection system, a trailer detection system, a trailer, a vehicle, a computer program, a data carrier signal and a computer-readable medium, that enable a trailer with a trailer detection system, unknown to the vehicle, to be connected to a vehicle in such a way that the trailer detection system reliably detects its trailer environment.

This object is achieved by the independent claims. Advantageous embodiments are given in the dependent claims.

In particular, the present invention provides a method for configuring a trailer detection system, wherein a trailer, comprising the trailer detection system, is connected to a vehicle, comprising a computing unit, via a hitch, comprising the following steps:
Determining, by the vehicle-integrated computing unit, that the trailer is connected to the vehicle via the hitch for data transmission;
Transmitting information about at least one attribute of the trailer to the computing unit of the vehicle;
Determining configuration data of the trailer detection system by the computing unit of the vehicle, based on the information about the at least one attribute of the trailer;
Transmitting the configuration data of the trailer detection system from the computing unit of the vehicle to a computing system of the trailer;
Configuring the trailer detection system on basis of the determined configuration data.

It is preferable that the order of the aforementioned method steps can be varied, unless technically necessary in the aforementioned order. However, the aforementioned order of the method steps is particularly preferred.

In the following, the basic idea of the invention and individual elements of the claimed invention subject matter are explained in accordance with their naming in the claim set and further in the following, particularly preferred embodiments of the invention subject matter are described. Any explanations are descriptive and preferred, but not limiting examples.

The basic idea of the invention is therefore that for a trailer there is a real-time configuration, preferably each time the trailer is connected to a vehicle, so that sensor units of the trailer detection system can reliably detect. The determining of the configuration data is based on information provided by the trailer. For this the vehicle obtains data on at least one attribute of the trailer in order to provide correct configuration data and thus enable reliable detection by the trailer. Advantageously, the parking function is available when the trailer is connected. In particular, it is a plug-and-play system, so no modification is required in or on the vehicle. It is also a cost-effective solution. There is the possibility of connecting a new trailer to the vehicle with different numbers of sensor units and positions. The configuration data may also be updated subsequently, for example if the trailer is loaded and thus changes its inclination.

In principle, it is intended that a trailer is connected to a vehicle via a trailer hitch. Trailers are objects that usually have a loading area for transporting goods but do not have their own drive. A trailer hitch, also known as trailer coupling, is a device used to connect a vehicle to a trailer, wherein the hitch is a component of the vehicle. Depending on the type of towing vehicle and trailer, four exemplary and non-limiting types can be found, namely drawbar couplings, common in agriculture and forestry; ball end couplings, common in motor vehicles; jaw couplings in trucks and tractors; and fifth wheels in semitrailers. Less common are types in which coupling hooks with corresponding eyelets are used. The regulations to be applied uniformly in the European Union, for example, are summarized in EC Directive 94/20. As a complete trailer hitch, this includes, for example, a trailer socket. Its primary purpose is to ensure the operation of the lighting equipment in accordance with the regulations in order to establish an interface between the trailer detection system or the computing system of the trailer and the vehicle in the sense of the invention. As an option, this interface can also be provided by wireless transmission, for example. In passenger cars, the connectors carry 12 volts nominal voltage. The 13-pin plug connection according to ISO 11446 has been mandatory since the late 1980s, and the 7-pin plug connection according to ISO 1724, and possibly also according to ISO 3732, can also be used for end-of-life vehicles. There are adapters for connecting the two mechanically incompatible systems. In addition, there are the rarer Multicon connectors according to the Dutch NEN 6120, which is compatible with ISO 1724 and additionally includes the contacts 8 to 13 of the 13-pin connector according to ISO 11446 in a ring shape. The 13-pin plug connection according to ISO 11446 permits one-hand operation and is operated by means of a bayonet lock. By turning the plug clockwise, a quarter of a turn, it is unplugged clockwise and counterclockwise without external pulling or pressurizing, the design permits one-hand operation. The selected bayonet operation is also due to the spring elements, which enclose each contact sleeve and cause the direct actuating forces to increase too much by pulling or pushing. In return, defined contact pressures and thus contact resistances on the one hand and any oxide layers on the plug contact pairs on the other hand are scraped off when actuated. The socket cover with closing spring serves as a protection against loosening. The cover presses on the molded-on circular blank of the plug and thus also prevents unintentional loosening by twisting. The housing is made of glass fiber reinforced plastic.

The 7-pole plug connection according to ISO 1724 or ISO 3732 as well as the 7+6-pole plugs according to Multicon are disconnected and plugged in by pulling and pushing. Depending on the contact pressure, large tensile and compressive forces must be applied. If the other hand is not used to hold against the other, the carrier plates of the trailer sockets are often bent in practice. The socket cover serves as a protection against loosening, the shaped tines of which grip behind the plug. The contacts consist of orthogonally slotted contact pins and rigid sleeves. The contact pressure is achieved by the slotted contact pins. Wear and tear and faulty operation, however, reduce this further and further. Decreasing contact pressure and surface corrosion can lead to inadmissibly high contact resistances. When loaded with high currents, the connection can become excessively hot, causing the contacts to burn and become permanently unusable. The housing is made of glass-fiber reinforced plastic, die-cast metal or sheet steel.

In the version of any standards, if unclear, the oldest filing date of the application documents should be used.

Computing systems or computing units are usually electronic modules, which are predominantly installed there where something has to be controlled or regulated. Computing systems are used in the automotive sector in all conceivable electronic areas, as well as for the control of machines, production lines and other technical processes. They are embedded systems. In current vehicles, computing systems are interconnected via various system buses (CAN, LIN, MOST, FlexRay, Ethernet). The devices use them to exchange system-wide information on operating states and other relevant data in the vehicle. In addition, on-board diagnostics or a vehicle diagnostics system is connected via such buses (and possibly the K-line). This allows communication with the computing systems from the outside using so-called diagnostic devices (alternatively with normal personal computers plus a suitable interface). The main question here is whether the control unit has detected and registered any errors in itself or in the sensors connected to it during the continuous self-tests. OSEK-OS, for example, has established itself in Germany as a real-time operating system and communication standard due to the increasing complexity and demands placed on software and the need for communication between computing systems. Another measure is the increasing standardization of computing system architectures. In the meantime, many computing systems are distributed over the entire vehicle in a normal vehicle. Some modern luxury sedans have more than 100 ECUs installed. The range of microcontrollers used as computing systems extends from 8-bit to 32-bit computers. Microcontrollers are semiconductor chips that contain a processor and peripheral functions at the same time. In many cases, the RAM and program memory are also partially or completely on the same chip. A microcontroller is a single-chip computing system. The term System-on-a-Chip or SoC is also used for some microcontrollers. Modern microcontrollers often include complex peripheral functions such as CAN (Controller Area Network), LIN (Local Interconnect Network), USB (Universal Serial Bus), I^2C (Inter-Integrated Circuit), SPI (Serial Peripheral Interface), serial or Ethernet interfaces, PWM outputs, LCD controllers and drivers, and analog-to-digital converters. Some microcontrollers also have programmable digital and/or analog or hybrid function blocks.

The terms computing system and computing unit differ terminologically in order to assign the computing system to the trailer and the computing unit to the vehicle. In principle, this does not mean that the computing system is more powerful or more complex than the computing unit and vice versa.

The determining, by the vehicle-integrated computer unit, that the trailer is connected to the vehicle via the hitch for data transmission is equivalent to trailer recognition. Up to now, manufacturers of towing vehicles have only carried out trailer recognition for reasons of comfort; the signal can, for example, adapt the shift points of automatic transmissions and chassis. Therefore, preference is given to vehicles that have technologies that detect a trailer with the help of the plugged-in connector. On the one hand, it is known that there is a switch in a socket which switches off the line of the rear fog lamp in the towing vehicle. This method is advantageous because of its simplicity and traceability. On the other hand, it is known that the trailer control unit connected to the CAN bus of the towing vehicle measures when the ignition is switched on whether bulbs are connected to the connections of the socket. To do this, a short current pulse is applied to the cable at regular intervals; existing incandescent lamps strongly attenuate the signal due to their characteristic cold resistance. If indicators, reversing lights and rear fog lamp as well as a white reversing light are connected to the socket, the trailer control unit signals trailer operation via the CAN bus. This enables, for example, the configuration of the trailer detection system to be started, but also influences the driving dynamics characteristics or the transmission shift points.

The transmitting of information about the at least one attribute of the trailer to the computing unit of the vehicle shall take place with a view to determining the assembly of the trailer detection system in order to determine the correct or appropriate configuration data. With regard to the one or more attributes, this means that the computing unit of the vehicle is provided with information enabling it to perform a robust assignment or identification of the trailer and its trailer detection system. For example, this information can be a model designation characterizing a certain trailer model. In a next step, the computing unit can use this model designation to determine the correct configuration data or, for example, retrieve it from a database, whereby the individual configuration data, in particular for each known trailer model, are assigned. This ensures that in the next step the computing unit of the vehicle can determine the configuration data. This ensures that the trailer detection system does not perform any false detections.

Afterwards, configuration data of the trailer detection system is determined by the computing unit of the vehicle based on the information about the at least one attribute of the trailer. For example, the computing unit can retrieve trailer construction data from a specific model number of the trailer and derive how individual sensor units of the trailer detection system are arranged to the underground, particularly in terms of height and angle to the underground. These values can be used, for example, to perform distance detection by the trailer detection system after the trailer detection system has been configured with configuration data. For example, the configuration data can be retrieved from a pre-installed database. This can be done from a memory of the trailer, the vehicle and/or in an external cloud. The basis for selecting the configuration data is then the information previously transmitted by the computing unit of the vehicle. As an alternative or for higher reliability with redundancy, the configuration data can also be calculated using a predefined algorithm. Here, too, the information previously transmitted to the computing unit of the vehicle serves as the basis for selecting the configuration data.

The trailer detection system is then configured based on the specific configuration data. This may be provided by the computing system of the trailer and/or by the computing unit of the vehicle. Although the trailer may not have been connected to the vehicle before the method was started, the trailer detection system of the trailer can now perform a qualified and reliable detection after configuring the trailer detection system. In other words, any unknowns that would prevent reliable detection have been eliminated by the vehicle.

According to a modified embodiment of the invention, it is provided that the information to be transmitted about the at least one attribute of the trailer is supplied to the computing unit of the vehicle via a manual input of the at least one attribute using a vehicle-integrated user interface. For example, a driver may enter data about height, number or type of trailer and/or trailer detection system into the user interface. The computing unit of the vehicle can use this data to determine the appropriate configuration data for the trailer and the trailer detection system. It may be that the manual input, as mentioned above, has specific technical data and/or that the manual input has a configuration code that causes the computing unit to use or load specific configuration data. An advantage is that the configuration data can always be entered as up-to-date data.

A manual input is an input made by a natural person. In particular, the person may be inside the vehicle.

According to a modified embodiment of the invention, it is provided that the information to be transmitted about the at least one attribute of the trailer is supplied to the computing unit of the vehicle by the computing system of the trailer, preferably stored in a data memory of the trailer. In other words, the computing system of the trailer transmits one or more attributes to the computing unit of the vehicle, whereby the one or more attributes are stored in the data memory of the trailer. This means that the data can always be retrieved immediately so that the vehicle can configure the trailer detection system without any technical hurdles. One such technical hurdle could be, for example, that there is no network coverage if any data from an external cloud were required. The one or more attributes can also use the data memory of the trailer as a temporary memory, whereby the trailer obtains the one or more attributes from another memory as main memory.

Optionally, it may be provided that the information to be transmitted is supplied partly from an aforementioned manual input and partly, as aforementioned, from the computing system of the trailer.

According to a modified embodiment of the invention, it is provided that the information comprises one or more of the following attributes: Model identification of the trailer; type of the trailer; number of sensor units mounted; distance between the sensor units; mounting angle of the sensor units; and/or height at which the sensor units are arranged opposite an underground based on a position of the hitch. It has been found that these are relevant system inputs to enable reliable detection with the trailer. Preferably all these characteristics are known. Optionally, it may be sufficient that only some of these characteristics are known in order to reduce the computing capacity, for example.

According to a modified embodiment of the invention, it is provided that the information transmitted to the computing unit of the vehicle for determining configuration data of the trailer detection system initiates a data retrieval, in particular of configuration data, from a database. For example, the information can be a sequence of letters and/or numbers. This can also be assigned to a specific set of configuration data, for example. This ensures that no new calculations have to be made, but that existing data can be utilized. However, it is also possible that individual technical values are entered as respective information. For example, a value of a height between individual sensor units and an underground leads to access to certain data that can be used for the configuration of the trailer detection system.

According to a modified embodiment of the invention, it is provided that the database is vehicle-integrated and/or externally stored. Vehicle-integrated data has the advantage that it can be accessed independently of network coverage. In underground garages, for example, there is no problem with their accessibility. The advantage of externally stored data is that it can always be kept up to date. If, for example, for a particular trailer model, it turns out that original data was incorrect, it can be overwritten promptly with new data, thereby preventing the incorrect data from being reused.

According to a modified embodiment of the invention, it is provided that the configuration data are determined using an arithmetic operation with use of the transmitted information by the computing unit of the vehicle. If, for example, the number of sensor units, their height to an underground and their arrangement angle to the underground is specified, enough configuration data can possibly already be determined from this. This allows a configuration and therefore flexible use of many different trailers, if the required data is known.

According to a modified embodiment of the invention, it is provided that the configuring of the trailer detection system based on the determined configuration data is carried out by the computing system of the trailer. This allows, for example, the use of vehicles whose functionality is enhanced by a powerful trailer.

According to a modified embodiment of the invention, it is provided that the configuring of the trailer detection system based on the determined configuration data is carried out by the computing unit of the vehicle. This means, for example, that trailers can be produced at low cost, while their added value remains available with a trailer detection system.

According to a modified embodiment of the invention, it is provided that the trailer detection system comprises one or more sensor units, wherein at least one sensor unit comprises a sensor computing unit designed as the computing system, which is configured such that the sensor computing unit controls one or more, preferably all, sensor units of the trailer detection system. This can be done as master-slave principle. Traditionally, most previous systems work with a computing unit that controls the sensor units individually and receives and evaluates their signals. The above-mentioned master-slave principle is a cost-effective system, whereby one of the sensor units assumes the task of the computing system, while the other sensor units are controlled by the sensor unit acting as the master sensor unit. This reduces costs and computing capacities.

According to a modified embodiment of the invention, it is provided that the trailer detection system comprises one or more sensor units and the computing system of the trailer comprises a trailer computing unit, wherein the trailer computing unit and the sensor units are configured such that the trailer computing unit controls one or more, preferably all, sensor units of the trailer detection system. This option can be applied in addition to the above-mentioned master-slave principle or completely separately. With an additional option, the redundant design increases reliability in the event of a single component failure. In other words, the vehicle's computing unit is not required to carry out the relevant process steps.

According to a modified embodiment of the invention, it is provided that the computing unit of the vehicle controls one or more, preferably all, sensor units of the trailer detection system. This allows the computing system of the trailer to be less complex, reducing the cost of the trailer.

It is also possible that an above-mentioned trailer sensor computing unit of the trailer, an above-mentioned trailer computing unit of the trailer and/or an above-mentioned computing unit of the vehicle may complement each other to control one or more, preferably all, sensor units of the trailer detection system. Individual sensor units can also be controlled by different computing units.

According to a modified embodiment of the invention, it is provided that a vehicle-integrated vehicle detection system is activated by decoupling the trailer from the vehicle. This means that detection is always possible, i.e. via the trailer detection system when the trailer is coupled and via the vehicle detection system when the trailer is uncoupled. The order in which the vehicle-integrated vehicle detection system is not activated until the trailer is decoupled from the vehicle means that no signals are superimposed, so that no false detections occur. Furthermore, the required computing capacity is reduced.

According to a modified embodiment of the invention, it is provided that the computing system of the trailer forwards distance information detected by the trailer detection system to the vehicle network via a communication interface. Thus, the detected data or distance information can be used for standard driving maneuvers. The distance information can, for example, be used during a parking maneuver. In other words, using this distance information, the trailer can be treated as a component of the vehicle.

According to a modified embodiment of the invention, it is provided that the trailer detection system is configured before an availability of the trailer detection system is indicated to the vehicle. This ensures that the driver of the vehicle does not perform any early driving maneuvers that could lead to an accident due to the lack of a trailer detection system already configured.

According to the invention, it is provided that the trailer is a bicycle trailer without separate contact with an underground. It has been found that the method is particularly suitable for bicycle trailers, as these are usually close to the vehicle. According to the invention the trailer is not in contact with the underground. This means that a driver can expand the vehicle to include the trailer without having to make any lasting changes to the driving behavior. In other words, it is a kind of fusion of two components, resulting in a fused detection system.

According to the invention, it is provided that the trailer detection system is an ultrasonic detection system. It has been found that the trailer detection system provides reliable detection if the trailer detection system is designed as an ultrasonic detection system. Individual sensor units are ultrasonic sensor units. It is also possible that the trailer detection system is at least an ultrasonic detection system, but also includes other sensor technologies, such as cameras. So, the ultrasonic sensor device may also include an electronic control unit, which is a computing unit, with which sensor signals provided by the ultrasonic sensors can be evaluated. The electronic control unit is also used to control the ultrasonic sensors to transmit the ultrasonic signal.

The present invention also provides a trailer detection system with means for configuring the trailer detection system for executing the steps of the method.

The present invention also provides a trailer comprising the trailer detection system.

The present invention also provides a vehicle with means for configuring a trailer detection system according to at least one of the preceding features.

The present invention also provides a computer program comprising instructions which, when the program is executed by a computer, cause the computer to execute the steps of the method. A computer program is a collection of instructions for performing a specific task that is designed to solve a specific class of problems. The instructions of a program are designed to be executed by a computer and it is required that a computer can execute programs in order to it to function.

The present invention also provides a data carrier signal, which the computer program transmits.

The present invention also provides a computer-readable medium comprising instructions which, when executed by a computer, cause the computer to execute the steps of the method.

These and other aspects of the invention will be apparent from and elucidated with reference to the embodiments described hereinafter. Individual features disclosed in the embodiments can constitute alone or in combination an aspect of the present invention. Features of the different embodiments can be carried over from one embodiment to another embodiment.

In the drawings:
- Fig. 1: shows a schematic side view of a vehicle with a trailer having a trailer detection system and a vehicle connected thereto, for carrying out a preferred method, according to the teaching of the invention;
- Fig. 2: shows a schematic block diagram of the vehicle and the trailer according to Figure 1, according to a first embodiment of the invention; and
- Fig. 3: shows a schematic block diagram of the vehicle and the trailer according to Figure 1, according to a second embodiment of the invention.

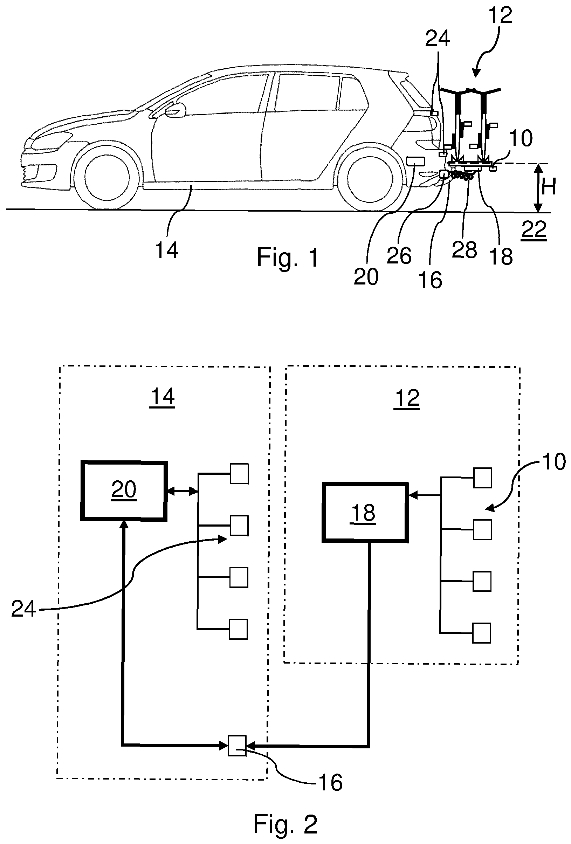

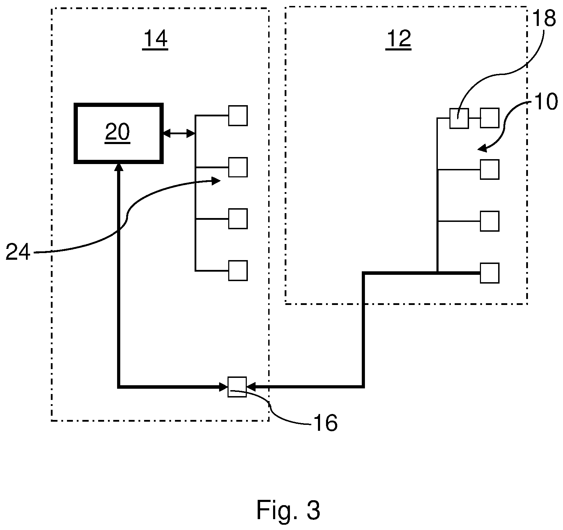

The Figures 1, 2 and 3 show the same structure of an exemplary configuration of a vehicle 14 and a trailer 12 connected to it. According to Figure 1, trailer 12 is exemplarily designed as a bicycle trailer. A hitch 16 with its coupling element along a height H is at a distance from an underground 22 on which the vehicle 14 stands. Figures 2 and 3 show block pictures according to a functional structure of the units of the vehicle 14 involved in the method according to the invention and of the units of the trailer 12 involved in the method according to the invention. The trailer 12 can be any trailer 12.

The Figures 1, 2 and 3 show an arrangement of a trailer 12 with a trailer detection system 10 connected to a vehicle 14 via a hitch 16. The trailer detection system 10 is configured, whereby this configuration is carried out by a method in accordance with the invention. This method is in particular a method for configuring the trailer detection system 10, wherein, as already mentioned, the trailer 12 is connected to the vehicle 14 via the hitch 16, and wherein the trailer 12 comprises the trailer detection system 10 and a computing system 18. The method comprises at least the following steps, namely a determining, by a vehicle-integrated computing unit 20, that the trailer 12 is connected to the vehicle 14 via the hitch 16 for data transmission; a transmitting information about at least one attribute of the trailer 12 to the computing unit 20 of the vehicle 14; a determining configuration data of the trailer detection system 10 by the computing unit 20 of the vehicle 14, based on the information about the at least one attribute of the trailer 12; a transmitting the configuration data of the trailer detection system 10 from the computing unit 20 of the vehicle 14 to a computing system 18 of the trailer 12; and a configuring the trailer detection system 10 on basis of the determined configuration data.

It is preferred that the information to be transmitted about the at least one attribute of the trailer 12 is supplied to the computing unit 20 of the vehicle 14 via a manual input of the at least one attribute using a vehicle-integrated user interface.

Furthermore, it is preferred that the information to be transmitted about the at least one attribute of the trailer 12 is supplied to the computing unit 20 of the vehicle 14 by the computing system 18 of the trailer 12, preferably stored in a data memory of the trailer 12.

One or more of the attributes can be entered manually and partly from the data memory of the trailer 12.

As can be derived from Figures 1, 2 or 3, the information includes one or more of the following attributes, in particular: Model identification of the trailer 12; type of the trailer 12; number of sensor units mounted; distance between the sensor units; mounting angle of the sensor units; and/or height H at which the sensor units are arranged opposite an underground 22 based on a position of the hitch 16.

It is preferred, but not shown in more detail, that the information transmitted to the computing unit 20 of the vehicle 14 for determining configuration data of the trailer detection system 10 initiates a data retrieval, in particular of configuration data, from a database. The database can be vehicle-integrated and/or stored externally.

In accordance with a preferred embodiment, the configuration data can be determined using an arithmetic operation with use of the transmitted information by the computing unit 20 of the vehicle 14.

As schematically shown in Figures 2 and 3, the configuring of the trailer detection system 10 is carried out on the basis of the determined configuration data is carried out by the computing system 18 of the trailer 12.

As can also be construed from the exemplary Figures 2 and 3, the configuring of the trailer detection system 10 is carried out on the basis of the determined configuration data, by the computing unit 20 of the vehicle 14.

In particular, Figure 3 provides that the trailer detection system 10 comprises one or more sensor units, wherein at least one sensor unit comprises a sensor computing unit designed as the computing system 18, which is configured such that the sensor computing unit controls one or more, preferably all, sensor units of the trailer detection system 10.

In particular, Figure 2 provides that the trailer detection system 10 comprises one or more sensor units and the computing system 18 of the trailer 12 comprises a trailer computing unit configured such that the trailer computing unit controls one or more, preferably all, sensor units of the trailer detection system 10.

As an example, according to Figure 1, it is possible that the computing unit 20 of the vehicle 14 controls one or more, preferably all, sensor units of the trailer detection system 10.

Also, to be interpreted according to Figure 1 is preferred that it is preferred that a vehicle-integrated vehicle detection system 24 is activated by decoupling the trailer 12 from the vehicle 14.

Particularly visible according to Figure 1 in the physical representation and symbolized according to Figures 2 and 3 in the transition at the trailer coupling 16, it is provided that the computing system 18 of the trailer 12 forwards distance information detected by the trailer detection system 10 to the vehicle network via a communication interface. Figure 1 shows a data cable 28 between the computing system 18 of trailer 12 and a communication box 26 of the vehicle 14. The communication between the trailer 12 and the vehicle 14 takes place via a corresponding communication protocol. A wireless connection as a communication interface to the vehicle network is also possible, but not shown.

It is preferable that the trailer detection system 10 is configured before an availability of the trailer detection system 10 is indicated to the vehicle 12.

As can be seen in Figure 1, the trailer 12 is preferably a bicycle trailer. Particularly preferred the trailer 12 has no separate contact to the underground 22. For example, the trailer 12 does not comprise a supporting wheel that stabilizes it against the underground 22.

The trailer detection system 10 is also shown in Figure 1 and can be assumed to be an ultrasonic detection system according to its arrangement.

### Reference signs list

- 10: trailer detection system
- 12: trailer
- 14: vehicle
- 16: hitch
- 18: computing system
- 20: computing unit
- 22: underground
- 24: vehicle detection system
- 26: communication box
- 28: data cable

- H: Height of the hitch from the underground

## Claims

1. Method for configuring a trailer detection system (10), wherein the trailer detection system (10) is an ultrasonic detection system, wherein a bicycle trailer (12), which is not in contact with the underground, comprising the trailer detection system (10), is connected to a vehicle (14), comprising a computing unit (20), via a hitch (16), comprising the following steps:
- Determining, by the vehicle-integrated computing unit (20), that the trailer (12) is connected to the vehicle (14) via the hitch (16) for data transmission;
- Transmitting information about at least one attribute of the trailer (12) to the computing unit (20) of the vehicle (14);
- Determining configuration data of the trailer detection system (10) by the computing unit (20) of the vehicle (14), based on the information about the at least one attribute of the trailer (12);
- Transmitting the configuration data of the trailer detection system (10) from the computing unit (20) of the vehicle (14) to a computing system (18) of the trailer (12);
- Configuring the trailer detection system (10) on basis of the determined configuration data.

2. Method according to claim 1, **characterized in that**
the information to be transmitted about the at least one attribute of the trailer (12) is supplied to the computing unit (20) of the vehicle (14) via a manual input of the at least one attribute using a vehicle-integrated user interface.

3. Method according to claim 1 or 2, **characterized in that**
the information to be transmitted about the at least one attribute of the trailer (12) is supplied to the computing unit (20) of the vehicle (14) by the computing system (18) of the trailer (12), preferably stored in a data memory of the trailer (12).

4. Method according to at least one of the preceding claims, **characterized in that** the information comprises one or more of the following attributes: Model identification of the trailer (12); type of the trailer (12); number of sensor units mounted; distance between the sensor units; mounting angle of the sensor units; and/or height (H) at which the sensor units are arranged opposite an underground (22) based on a position of the hitch (16).

5. Method according to at least one of the preceding claims, **characterized in that** the information transmitted to the computing unit (20) of the vehicle (14) for determining configuration data of the trailer detection system (10) initiates a data retrieval, in particular of configuration data, from a database.

6. Method according to the preceding claim, **characterized in that** the database is vehicle-integrated and/or externally stored.

7. Method according to at least one of the preceding claims, **characterized in that** the configuration data are determined using an arithmetic operation with use of the transmitted information by the computing unit (20) of the vehicle (14).

8. Method according to at least one of the preceding claims, **characterized in that** the configuring of the trailer detection system (10) based on the determined configuration data is carried out by the computing system (18) of the trailer (12).

9. Method according to at least one of the preceding claims, **characterized in that** the configuring of the trailer detection system (10) based on the determined configuration data is carried out by the computing unit (20) of the vehicle (14).

10. Method according to at least one of the preceding claims, **characterized in that** the trailer detection system (10) comprises one or more sensor units, wherein at least one sensor unit comprises a sensor computing unit designed as the computing system (18), which is configured such that the sensor computing unit controls one or more, preferably all, sensor units of the trailer detection system (10).

11. Method according to at least one of the preceding claims, **characterized in that** the trailer detection system (10) comprises one or more sensor units and the computing system (18) of the trailer (12) comprises a trailer computing unit configured such that the trailer computing unit controls one or more, preferably all, sensor units of the trailer detection system (10).

12. Method according to at least one of the preceding claims, **characterized in that** the computing unit (20) of the vehicle (14) controls one or more, preferably all, sensor units of the trailer detection system (10).

13. Method according to at least one of the preceding claims, **characterized in that** a vehicle-integrated vehicle detection system (24) is activated by decoupling the trailer (12) from the vehicle (14).

14. Method according to at least one of the preceding claims, **characterized in that** the computing system (18) of the trailer (12) forwards distance information detected by the trailer detection system (10) to the vehicle network via a communication interface.

15. Method according to at least one of the preceding claims, **characterized in that** the trailer detection system (10) is configured before an availability of the trailer detection system (10) is indicated to the vehicle (12).

16. Trailer detection system (10) with means for configuring the trailer detection system (10) according to at least one claims 1 to 15. for executing steps of a method according to at least one of the preceding claims.

17. Trailer (12) comprising a trailer detection system (10) according to the preceding claim.

18. Vehicle (14) with means for configuring a trailer detection system (10) according to at least one of claims 1 to 15.

19. Computer program comprising instructions which, when the program is executed by a computer, cause the computer to execute the steps of the method according to at least one of claims 1 to 15.

20. Data carrier signal carrying the computer program according to the preceding claim.

21. Computer-readable medium comprising instructions which, when executed by a computer, cause the computer to execute the steps of the method according to at least one of the preceding claims.

## Patentansprüche

1. Verfahren zum Konfigurieren eines Anhängererkennungssystems (10), wobei das Anhängererkennungssystem (10) ein Ultraschallerkennungssystem ist, wobei ein Fahrradanhänger (12), der keinen Kontakt zum Untergrund hat,
das Anhängererkennungssystem (10) umfasst, über eine Anhängerkupplung (16) mit einem Fahrzeug (14) verbunden ist, das eine Recheneinheit (20) umfasst, mit den folgenden Schritten:
Feststellen durch die fahrzeugintegrierte Recheneinheit (20), dass der Anhänger (12) über die Anhängerkupplung (16) zur Datenübertragung mit dem Fahrzeug (14) verbunden ist;
- Übertragen von Informationen über mindestens ein Merkmal des Anhängers (12) an die Recheneinheit (20) des Fahrzeugs (14);
Ermitteln von Konfigurationsdaten des Anhängererkennungssystems (10) durch die Recheneinheit (20) des Fahrzeugs (14) auf der Grundlage der Informationen über mindestens ein Merkmal des Anhängers (12);
- Übertragen der Konfigurationsdaten des Anhängererkennungssystems (10) von der Recheneinheit (20) des Fahrzeugs (14) an ein Rechnersystem (18) des Anhängers (12);
- Konfigurieren des Anhängererkennungssystems (10) auf der Grundlage der ermittelten Konfigurationsdaten.

2. Verfahren nach Anspruch 1, **dadurch gekennzeichnet, dass** die zu übertragenden Informationen über mindestens ein Merkmal des Anhängers (12) der Recheneinheit (20) des Fahrzeugs (14) über eine manuelle Eingabe des mindestens eines Merkmals unter Verwendung einer fahrzeugintegrierten Benutzerschnittstelle zugeführt werden.

3. Verfahren nach Anspruch 1 oder 2, **dadurch gekennzeichnet, dass** die zu übertragenden Informationen über das mindestens eine Merkmal des Anhängers (12) der Recheneinheit (20) des Fahrzeugs (14) durch das Rechensystem (18) des Anhängers (12) zugeführt werden, vorzugsweise gespeichert in einem Datenspeicher des Anhängers (12).

4. Verfahren gemäß mindestens einem der vorstehenden Ansprüche, **dadurch gekennzeichnet, dass** die Informationen eines oder mehrere der folgenden Attribute umfassen: Modellidentifikation des Anhängers (12); Typ des Anhängers (12); Anzahl der montierten Sensoreinheiten; Abstand zwischen den Sensoreinheiten; Montagewinkel der Sensoreinheiten; und/oder Höhe (H), in der die Sensoreinheiten gegenüber einer Untergrundvorrichtung (22) basierend auf einer Position der Anhängerkupplung (16) angeordnet sind.

5. Verfahren nach mindestens einem der vorstehenden Ansprüche, **dadurch gekennzeichnet, dass** die an die Recheneinheit (20) des Fahrzeugs (14) zur Ermittlung von Konfigurationsdaten des Anhängererkennungssystems (10) übermittelten Informationen einen Datenabruf, insbesondere von Konfigurationsdaten, aus einer Datenbank initiieren.

6. Verfahren nach dem vorstehenden Anspruch, **dadurch gekennzeichnet, dass** die Datenbank fahrzeugintegriert und/oder extern gespeichert ist.

7. Verfahren nach mindestens einem der vorstehenden Ansprüche, **dadurch gekennzeichnet, dass** die Konfigurationsdaten unter Verwendung der übertragenen Informationen durch die Recheneinheit (20) des Fahrzeugs (14) mittels einer arithmetischen Operation ermittelt werden.

8. Verfahren nach mindestens einem der vorstehenden Ansprüche, **dadurch gekennzeichnet, dass** die Konfiguration des Anhängererkennungssystems (10) auf der Grundlage der ermittelten Konfigurationsdaten durch das Rechensystem (18) des Anhängers (12) durchgeführt wird.

9. Verfahren nach mindestens einem der vorstehenden Ansprüche, **dadurch gekennzeichnet, dass** die Konfiguration des Anhängererkennungssystems (10) auf der Grundlage der ermittelten Konfigurationsdaten durch die Recheneinheit (20) des Fahrzeugs (14) durchgeführt wird.

10. Verfahren nach mindestens einem der vorstehenden Ansprüche, **dadurch gekennzeichnet, dass** das Anhängererkennungssystem (10) eine oder mehrere Sensoreinheiten umfasst, wobei mindestens eine Sensoreinheit eine als Rechensystem (18) ausgebildete Sensor-Recheneinheit umfasst, die so konfiguriert ist, dass die Sensor-Recheneinheit eine oder mehrere, vorzugsweise alle Sensoreinheiten des Anhängererkennungssystems (10) steuert.

11. Verfahren nach mindestens einem der vorstehenden Ansprüche, **dadurch gekennzeichnet, dass** das Anhängererkennungssystem (10) eine oder mehrere Sensoreinheiten umfasst und das Rechensystem (18) des Anhängers (12) eine Anhängerrecheneinheit umfasst, die so konfiguriert ist, dass die AnhängerRecheneinheit eine oder mehrere, vorzugsweise alle Sensoreinheiten des Anhängererkennungssystems (10) steuert.

12. Verfahren nach mindestens einem der vorstehenden Ansprüche, **dadurch gekennzeichnet, dass** die Recheneinheit (20) des Fahrzeugs (14) eine oder mehrere, vorzugsweise alle Sensoreinheiten des Anhängererkennungssystems (10) steuert.

13. Verfahren nach mindestens einem der vorstehenden Ansprüche, **dadurch gekennzeichnet, dass** ein fahrzeugintegriertes Fahrzeugerkennungssystem (24) durch Abkoppeln des Anhängers (12) vom Fahrzeug (14) aktiviert wird.

14. Verfahren nach mindestens einem der vorstehenden Ansprüche, **dadurch gekennzeichnet, dass** das Rechnersystem (18) des Anhängers (12) vom Anhängererkennungssystem (10) erfasste Abstandsinformationen über eine Kommunikationsschnittstelle an das Fahrzeugnetzwerk weiterleitet.

15. Verfahren nach mindestens einem der vorstehenden Ansprüche, **dadurch gekennzeichnet, dass** das Anhängererkennungssystem (10) konfiguriert wird, bevor eine Verfügbarkeit des Anhängererkennungssystems (10) dem Fahrzeug (12) angezeigt wird.

16. Anhängererkennungssystem (10) mit Mitteln zum Konfigurieren des Anhängererkennungssystems (10) gemäß mindestens einem der Ansprüche 1 bis 15 zum Ausführen von Schritten eines Verfahrens gemäß mindestens einem der vorstehenden Ansprüche.

17. Anhänger (12) mit einem Anhängererkennungssystem (10) gemäß dem vorstehenden Anspruch.

18. Fahrzeug (14) mit Mitteln zum Konfigurieren eines Anhängererkennungssystems (10) gemäß mindestens einem der Ansprüche 1 bis 15.

19. Computerprogramm mit Anweisungen, die, wenn das Programm von einem Computer ausgeführt wird, den Computer veranlassen, die Schritte des Verfahrens gemäß mindestens einem der Ansprüche 1 bis 15 auszuführen.

20. Datenträger mit dem Computersignal gemäß dem vorstehenden Anspruch.

21. Computerlesbares Medium, das Anweisungen umfasst, die, wenn sie von einem Computer ausgeführt werden, den Computer veranlassen, die Schritte des Verfahrens gemäß mindestens einem der vorstehenden Ansprüche auszuführen.

## Revendications

1. Procédé de configuration d'un système de détection de remorque (10), dans lequel le système de détection de remorque (10) est un système de détection à ultrasons, dans lequel une remorque de vélo (12), qui n'est pas en contact avec le sol,
comprenant le système de détection de remorque (10), est reliée à un véhicule (14), comprenant une unité de calcul (20), via un attelage (16), comprenant les étapes suivantes:
Déterminer, à l'aide de l'unité de calcul (20) intégrée au véhicule, que la remorque (12) est reliée au véhicule (14) via l'attelage (16) pour la transmission de données ;
- Transmettre des informations sur au moins un attribut de la remorque (12) à l'unité de calcul (20) du véhicule (14) ;
Détermination des données de configuration du système de détection de remorque (10) par l'unité informatique (20) du véhicule (14), sur la base des informations concernant au moins un attribut de la remorque (12) ;
- Transmettre les données de configuration du système de détection de remorque (10) depuis l'unité de calcul (20) du véhicule (14) vers un système de calcul (18) de la remorque (12) ;
- Configurer le système de détection de remorque (10) sur la base des données de configuration déterminées.

2. Procédé selon la revendication 1, **caractérisé en ce que** les informations à transmettre concernant au moins un attribut de la remorque (12) sont fournies à l'unité de calcul (20) du véhicule (14) via une saisie manuelle dudit attribut à l'aide d'une interface utilisateur intégrée au véhicule.

3. Procédé selon la revendication 1 ou 2, **caractérisé en ce que** les informations à transmettre concernant au moins un attribut de la remorque (12) sont fournies à l'unité de calcul (20) du véhicule (14) par le système de calcul (18) de la remorque (12), de préférence stockées dans une mémoire de données de la remorque (12).

4. Procédé selon au moins l'une des revendications précédentes, **caractérisé en ce que** les informations comprennent un ou plusieurs des attributs suivants : identification du modèle de la remorque (12) ; type de remorque (12) ; nombre d'unités de capteurs montées ; distance entre les unités de capteurs ; angle de montage des unités de capteurs ; et/ou hauteur (H) à laquelle les unités de capteurs sont disposées en face d'un souterrain (22) en fonction de la position de l'attelage (16).

5. Procédé selon au moins l'une des revendications précédentes, **caractérisé en ce que** les informations transmises à l'unité de calcul (20) du véhicule (14) pour déterminer les données de configuration du système de détection de remorque (10) déclenchent une récupération de données, en particulier de données de configuration, à partir d'une base de données.

6. Procédé selon la revendication précédente, **caractérisé en ce que** la base de données est intégrée au véhicule et/ou stockée à l'extérieur.

7. Procédé selon au moins l'une des revendications précédentes, **caractérisé en ce que** les données de configuration sont déterminées à l'aide d'une opération arithmétique utilisant les informations transmises par l'unité de calcul (20) du véhicule (14).

8. Procédé selon au moins l'une des revendications précédentes, **caractérisé en ce que** la configuration du système de détection de remorque (10) sur la base des données de configuration déterminées est effectuée par le système informatique (18) de la remorque (12).

9. Procédé selon au moins l'une des revendications précédentes, **caractérisé en ce que** la configuration du système de détection de remorque (10) sur la base des données de configuration déterminées est effectuée par l'unité de calcul (20) du véhicule (14).

10. Procédé selon au moins l'une des revendications précédentes, **caractérisé en ce que** le système de détection de remorque (10) comprend une ou plusieurs unités de capteurs, dans lequel au moins une unité de capteurs comprend une unité de calcul de capteurs conçue comme le système informatique (18), qui est configurée de telle sorte que l'unité de calcul de capteurs contrôle une ou plusieurs, de préférence toutes les unités de capteurs du système de détection de remorque (10).

11. Procédé selon au moins l'une des revendications précédentes, **caractérisé en ce que** le système de détection de remorque (10) comprend une ou plusieurs unités de capteurs et le système informatique (18) de la remorque (12) comprend une unité informatique de remorque configurée de telle sorte que l'unité de calcul de la remorque contrôle une ou plusieurs, de préférence toutes les unités de capteurs du système de détection de remorque (10).

12. Procédé selon au moins l'une des revendications précédentes, **caractérisé en ce que** l'unité de calcul (20) du véhicule (14) contrôle une ou plusieurs, de préférence toutes les unités de capteurs du système de détection de remorque (10).

13. Procédé selon au moins l'une des revendications précédentes, **caractérisé en ce que** un système de détection de véhicule intégré au véhicule (24) est activé par le découplage de la remorque (12) du véhicule (14).

14. Procédé selon au moins l'une des revendications précédentes, **caractérisé en ce que** le système informatique (18) de la remorque (12) transmet les informations de distance détectées par le système de détection de remorque (10) au réseau du véhicule via une interface de communication.

15. Procédé selon au moins l'une des revendications précédentes, **caractérisé en ce que** le système de détection de remorque (10) est configuré avant qu'une disponibilité du système de détection de remorque (10) ne soit indiquée au véhicule (12).

16. Système de détection de remorque (10) avec des moyens pour configurer le système de détection de remorque (10) selon au moins l'une des revendications 1 à 15. Pour exécuter les étapes d'un procédé selon au moins l'une des revendications précédentes.

17. Remorque (12) comprenant un système de détection de remorque (10) selon la revendication précédente.

18. Véhicule (14) avec des moyens pour configurer un système de détection de remorque (10) selon au moins l'une des revendications 1 à 15.

19. Programme informatique comprenant des instructions qui, lorsque le programme est exécuté par un ordinateur, amènent l'ordinateur à exécuter les étapes du procédé selon au moins l'une des revendications 1 à 15.

20. Support de données portant le signal du programme informatique selon la revendication précédente.

21. Support lisible par ordinateur comprenant des instructions qui, lorsqu'elles sont exécutées par un ordinateur, amènent l'ordinateur à exécuter les étapes du procédé selon au moins l'une des revendications précédentes.
